# EUROPEAN PATENT APPLICATION

(11) **EP 1 224 863 A2**
(43) Date of publication of application: **24.07.2002**
(21) Application number: 01127099.8
(22) Date of filing: 15.11.2001
(51) Int. Cl.: A01M 19/00, A01M 21/04

(54) **Microwave disinfestation system for biological pests**

(30) Priority: 23.01.2001 IT MI010120
(71) Applicant: ITEL Telecomunicazioni S.r.l., 70037 Ruvo di Puglia (BA) (IT)
(72) Inventor: Diaferia, Nicola, 70033 Corato (Bari) (IT)
(74) Representative: Petruzziello, Aldo

(57) **Abstract**

An apparatus for disinfesting objects of biological pests comprises a shielded chamber (1) inside which the object to be disinfested is placed and microwave generating means (MG1, MG2, MG3 MG4) able to emit microwaves toward said object to be disinfested in order to increase the temperature of the biological pests until attainment of the lethal temperature at which death of the biological pests occurs, the apparatus also comprising means (9, S1, S2, S3) for detection of the temperature of the object and means (ST1, ST2 ) for distribution of the microwaves inside said shielded chamber.

## Description

The present invention refers in general to a microwave system for disinfestation from biological pests and in particular to a microwave apparatus for disinfesting objects from biological pests and a method of disinfesting objects from biological pests based on the use of microwaves.

The microwave system according to the invention is particularly suitable for disinfesting objects from biological pests, such as moths, woodworm, fungi, moulds and like, which are noxious to the same objects and also for sterilizing and disinfesting objects, such as paper, fabric, wood and like, from biological pests, such as virus, bacteria, germs, spores and like, which are injurious to the human health.

Many objects made of wood, paper, fabric and the like undergo significant damage following attack by biological pests of various types, such as for example moulds, fungi, bacteria, woodworm, moths, etc. This problem is all the more serious in the case of antique objects of monetary, artistic and cultural value, such as, for example, furniture, books, carpets, paintings, etc. A typical example is represented by the destructive effects wrought by xylophagous insects (for example woodworm) on furniture, musical instruments, paintings, frames, wooden statues, etc.

At present disinfestation from biological pests is performed prevalently with chemical means. The object to be disinfested is sprayed with insecticides or placed in a chamber into which chemical insecticides in gaseous form are sprayed.

These known methods have significant drawbacks due mainly to the environmental pollution caused by the insecticide gases and the poor compatibility of the insecticide with the article to be treated. Furthermore, the known methods often require several treatments and very long times before the item treated can be restored.

The object of the present invention is to provide an apparatus and a method for disinfesting objects from biological pests that are practical, versatile and simple to realize.

Another object of the present invention is to provide an apparatus and a method for disinfesting objects of biological pests such as to avoid release of pollutant effects into the atmosphere.

Yet another object of the present invention is to provide an apparatus and a method for disinfesting objects of biological pests, which allow rapid treatment and immediate restoration of the article treated.

These objects are achieved according to the invention with the apparatus and the method for disinfesting objects of biological pests, whose characteristics are listed in independent claims 1 and 12, respectively.

Advantageous embodiments of the invention are apparent from the dependent claims.

The microwave system for disinfestation from biological pests was born from the observation that many biological forms do not survive beyond a certain temperature, called the "lethal temperature" which for woodworm, for example, falls in the range of 50-100 degrees centigrade. This lethal temperature is also observed for the eggs of biological pests. The disinfestation method according to the invention thus exploits thermalization of the electromagnetic energy generated by microwaves to heat the infesting biological forms to above their lethal temperature. This causes the death of the infesting biological forms and of their eggs.

The apparatus according to the invention has a shielded chamber inside which the object to be treated is placed and irradiated with the microwaves given off by microwave generators associated with the chamber. Since the infesting biological forms contain high percentages of water, the electromagnetic waves cause a heating effect in said infesting forms, without having effects on the materials making up the object, which do not contain significant percentages of water.

The microwave irradiation inside the chamber and the temperature of the object being treated are monitored by means of sensors to achieve adequate control of the process.

The selective action of heating limited to the biological forms is the peculiar characteristic of the disinfestation system according to the invention, which is particularly suitable for use for disinfestation of artistic objects.

Furthermore the system according to the invention has various advantages, such as:
- the speed of the treatment, which lasts only a few minutes;
- the lack of polluting effects, since the microwave energy is confined to the shielded chamber and no waste is produced;
- the possibility of recovery of the object immediately after disinfestation, since there is no energy present at the end of treatment.

Furthermore such a microwave system according to the invention, can be used also for the disinfestation of objects from microrganisms injurious to human health. In this case, the infestated object is subjected to electromagnetic wave radiation up to the lethal temperature for the pathogenic microorganisms, which in general falls in the range of 100 - 150 °C.

Further characteristics of the invention will be made clearer by the detailed description that follows, referring to a purely exemplary and non-limiting embodiment thereof, illustrated in the appended drawings, in which:
Figure 1 is a diagrammatic perspective view, illustrating the microwave apparatus for disinfestation from biological pests according to the invention;
Figure 2 is a longitudinal sectional view along sectional plane II-II of Figure 1;
Figure 3 is a cross sectional view, along sectional plane III-III of Figure 2;
Figure 4 is a block diagram illustrating connection of a microwave generator to the apparatus according to the invention;
Figure 5 is a block diagram illustrating the apparatus according to the invention.

An apparatus for disinfestation from biological pests will be described with the aid of the figures.

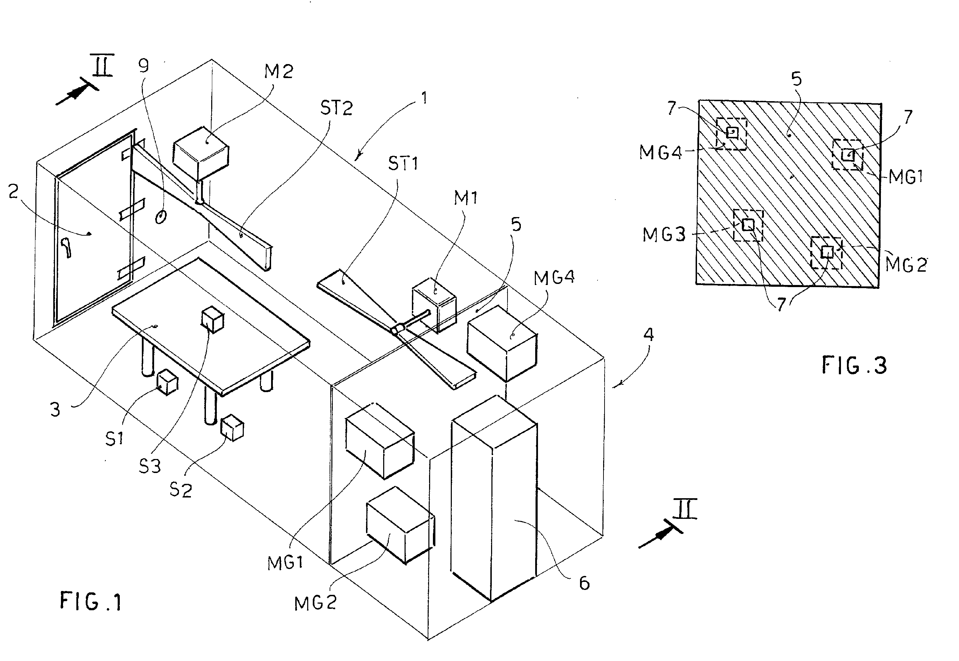

As shown in Figures 1-3, the apparatus according to the invention has a shielded chamber 1 comprising metal microwave-shielding walls. The chamber 1 has an access door 2 with a tight seal, to allow introduction of the articles to be disinfested. By way of example, a table 3 is placed inside the chamber 1.

The shielded chamber 1 is separated from a control chamber 4 by means of a shielded wall 5. Four microwave generating devices MG1, MG2, MG3 and MG4 connected to a control panel 6 are positioned inside the control chamber 4.

As shown in Figure 3, the microwave generators MG1, MG2, MG3 and MG4 are set into the dividing wall 5 and the dividing wall 5 has four slots 7 in register respectively with the microwave inlet mouths of the four microwave generators to allow the microwaves to be let into the shielded chamber 1.

In order to achieve a uniform distribution of the electromagnetic field inside the shielded chamber 1, use if made of mode mixers or stirrers ST1 and ST2 which are blades rotated by means of respective shafts connected to respective electric motors M1 and M2 disposed outside the shielded chamber 1. The stirrers are rotated at a variable speed from 10 -100 revolutions per minute, so as to transform the shielded camber 1 into a reverberating chamber. By way of example, two stirrers ST1 and ST2 disposed with their shafts at right angles to a wall and to the roof of the shielded chamber 1 are illustrated.

In order to monitor the temperature of the item 3 disposed inside the chamber 1, an infrared thermo-camera disposed outside the chamber 1 and set into a wall of the chamber 1 is provided. In this case the wall of the chamber 1 which accommodates the thermo-camera has a through slot 9 in register with the lens of the thermo-camera 8. If precise monitoring of the surface temperature of the object 3 is not necessary, three fibre optic temperature sensors S1, S2 and S3 able to sense the surface temperature of the object 3 are positioned inside the shielded chamber 1, in close proximity to or in contact with the object 3.

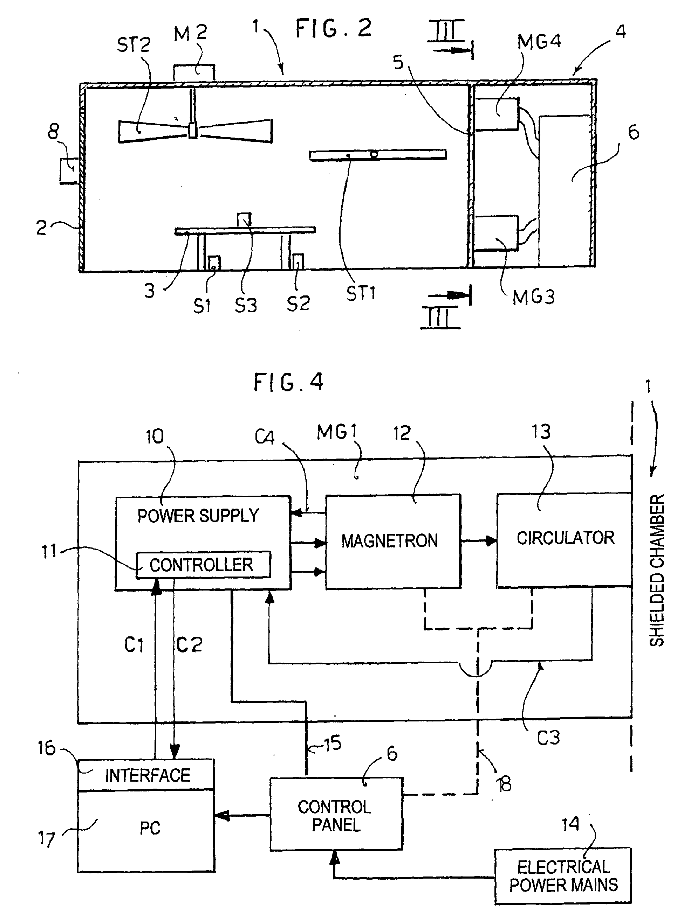

As shown in Figure 4, the microwave generator MG1 comprises:
- a magnetron 12 for generation of electromagnetic waves in the microwave range at a frequency of about 2450 MHz;
- a power supply 10 provided with a control module 11, to regulate the input power to be supplied to the magnetron 12; and
- a circulator 13 that comprises a microwave input mouth and a load able to dissipate the power of the microwaves reflected by the walls of the shielded chamber 1.

The power supply 10 takes its electrical power from a power line 15 coming from the control panel 6, which in turn is connected to the electrical power network 14. The controller 11 of the power supply 10 is connected, by means of signal lines, to an interface 16 of a processor 17 which can be, for example, a portable computer or a computer integrated into the control panel 6. A signal line C1 is provided from the interface 16 to the controller 11. In this manner, by means of commands imparted to the processor 17, the electrical power supplied by the power supply 10 to the magnetron 12 can be varied. A second signal line C2 is provided from the controller 11 to the interface 16 so that the processor 17 can know the electrical power provided by the power supply 10 to the magnetron 12.

By means of the computer 17 or the control panel 6 the user sends the electrical power supply from the power supply 10 to the magnetron 12 and to the circulator 13. Power in the form of microwaves is thus sent into the shielded chamber 1 through the inlet mouth of the circulator 13 positioned in a slot 7 in the wall 5 of the shielded chamber 1. The power of the microwaves is diffused into the chamber 1 by means of the stirrers ST1 and ST2, and the chamber 1 acts as a reverberating chamber. The microwave power strikes the body 3 and is reflected by the walls of the chamber 1, discharging both onto the item 3 and onto the load of the circulator 13.

A signal line C3 from the circulator 13 to the controller 11 is provided. In this manner, a control signal indicating the power dissipated by the load of the circulator 13 is sent to the controller 11 of the power supply. If the value of the power dissipated by the load of the circulator 13 is greater than a preset threshold value, the controller 11 reduces or stops the electrical power supply to the magnetron 12 so as to reduce the power of the microwaves generated by the magnetron.

A signal line C4 that goes from the magnetron 12 to the controller 11 is provided. A thermocouple is provided on the magnetron to measure its temperature. When the temperature of the magnetron exceeds a pre-set value, a control signal is sent to the controller 11 of the power supply and the controller 11 reduces or stops the supply of electrical power to the magnetron 12.

The operator also can control the controller 11 manually by means of the processor 17 to increase or decrease the electrical power provided by the power supply 10.

Furthermore, both the magnetron 12 and the circulator 13 are cooled by means of a water cooling circuit 18 connected to a water cooling device, separate or integrated into the control panel 6.

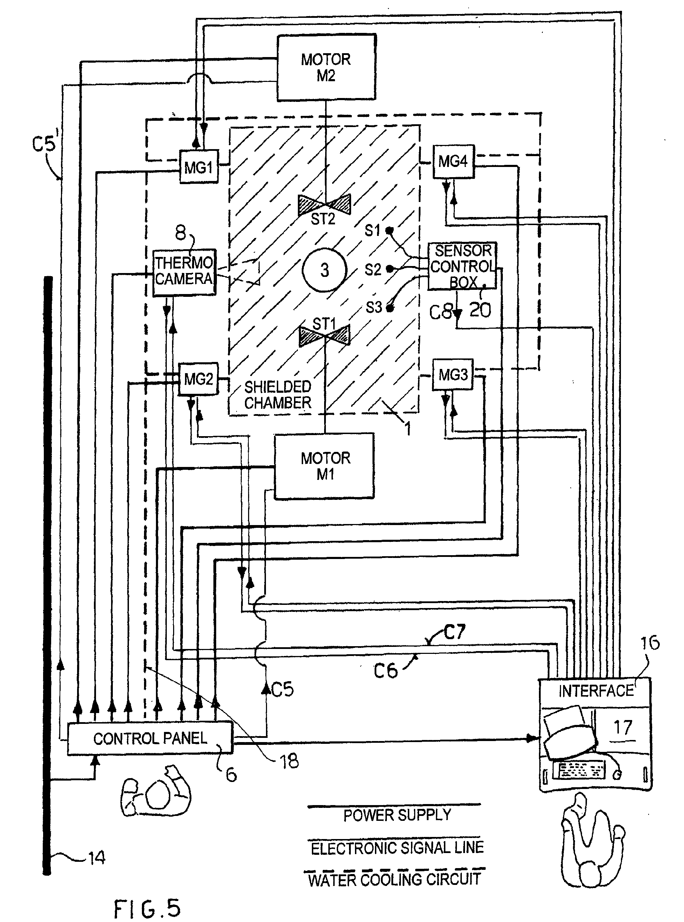

As shown in Figure 5, the four microwave generators MG1, MG2, MG3 and MG4 are connected, according to the scheme of Figure 4, to the control panel 6 and to the interface 16 of the processor 17.

The motors M1, M2 of the stirrers ST1 and ST2 are electrically powered by means of respective electrical power lines coming from the control panel 6. Furthermore electronic signal lines C5 and C5' are provided which go from the control panel 6 to the motors M1 and M2 respectively to send control signals for regulation of their rotational speed.

The infrared thermo-camera 8 is powered from the control panel 6 and detects the surface temperature of the object 3. An electronic signal line C6 is provided that goes from the thermo-camera 8 to the interface 16 of the computer 17 so as to send the computer 17 a signal indicating the temperature detected. Furthermore an electronic signal line C7 that goes from the interface 16 to the thermo-camera 8 is provided. In this manner the user, by means of the processor 17, can send control signals, through the line C7, to the thermo-camera 8 to adjust the zoom, focus and temperature of the thermo-camera.

The three fibre optic sensors S1, S2 and S3 are connected to a sensor control box 20 which receives its power supply from the control panel 6 to power the three sensors S1, S2 and S3. The sensors S1, S2 and S3 sense the temperature at three points of the object 3 and accordingly produce an electrical output signal. The signals produced by the sensors, indicating the temperatures at each point of measurement on the object 3, are averaged in the control box 20.

The box 20 is connected to the interface 16, by means of an electronic signal line C8. Thus an electronic signal indicating a mean temperature measured on the object 3 is sent to the interface 16 through the line C8. Obviously in place of the box 20 the sensors S1, S2 and S3 can be connected directly to the interface 16 by means of the same bus or different buses.

In any case the temperature value measured by the thermo-camera 8 and/or by the sensors S1, S2 and S3 is a surface temperature value for the object 3. The internal temperature value of the object 3 is calculated by the processor 17 on the basis of the physical and chemical data characteristic of the object 3 which have been measured previously. In any case according to the type of object to be treated there exist treatment protocols to be observed.

Moreover, the microwave power generated by the magnetrons 12 can be automatically or manually adjusted according to the temperature value measured by the thermo-camera 8 and/or by the sensors S1, S2 and S3. In fact, once the processor 17 has calculated the temperature of the object 3, according to this calculated value the processor 17 sends control signals through the line C1 to the controller 11 of the power supply 10 which is responsible for powering the magnetron 12.

Thus, if the temperature calculated by the processor 17 exceeds a certain preset threshold, the electrical power supply to the magnetron 12 is decreased, if the temperature calculated by the processor 17 is below a certain preset threshold, the electrical power supply the to the magnetron 12 is increased.

This regulation of the power to be sent to the magnetrons 12 can also be done manually by the user, by means of the processor 17, according to the temperature calculated and displayed by the processor 17.

The described apparatus can be used in general for the disinfestation of any object from any type of biological pest. However, the preferred field of the apparatus according to the invention is for the disinfestation of objects from biological pests, such as moths, woodworm, fungi, moulds and like, which are noxious to the same objects and for disinfestations of objects, from biological pests, such as virus, bacteria, germs, spores and like, which are injurious to human health.

Numerous variations or modifications of detail within the reach of a person skilled in the art can be made to the present embodiment of the invention without departing from the scope of the invention as set forth in the appended claims.

## Claims

1. An apparatus for disinfesting objects from biological pests comprising a microwave generator (MG1, MG2, MG3, MG4) able to give out microwaves toward said object to be disinfested in order to increase the temperature of the biological pests until attainment of the lethal temperature at which death of the biological pests and of their eggs occurs.

2. An apparatus according to claim 1, **characterized in that** it comprises a chamber (1), shielded by means of metal walls, into which said object to be disinfested is introduced.

3. An apparatus according to claim 2, **characterized in that** said microwave generators (MG1, MG2, MG3, MG4) are disposed outside said shielded chamber (1) and at least one wall (5) of said shielded chamber comprises slots (7) through which the microwaves coming from said microwave generators are irradiated.

4. An apparatus according to claim 2 or 3, **characterized in that** inside said shielded chamber (1) is at least one mode mixer or stirrer (ST1, ST2) comprising a blade driven in rotation by an electric motor (M1, M2) disposed outside said shielded chamber (1) able to distribute uniformly the electromagnetic field generated by said microwaves.

5. An apparatus according to any one of the preceding claims, **characterized in that** it comprises temperature detection means (8, S1, S2, S3) able to sense the temperature of said item (3) to be disinfested.

6. An apparatus according to claim 5, **characterized in that** said temperature detection means comprise:
- an infrared thermo-camera (8) disposed outside said shielded chamber (1), in which a wall of said shielded chamber is provided with a slot (9) in register with the lens of the thermo-camera (8) so that the thermo-camera can detect the surface temperature of said article (3) to be disinfested, and/or
- at least one fibre optic sensor (S1, S2, S3) disposed inside said shielded chamber (1) near or in contact with said item to be disinfested.

7. An apparatus according to any one of the preceding claims, **characterized in that** said microwave generator comprises:
- a magnetron (12) for generation of electromagnetic waves in the microwave range;
- a power supply (10) provided with a control module (11) to regulate the power supply to be provided to the magnetron (12); and
- a circulator (13) comprising an irradiation mouth for the electromagnetic waves and a load able to dissipate the power of the microwaves reflected by the walls of the shielded chamber (1).

8. An apparatus according to claim 7 **characterized in that** said microwave generation means are provided with a water cooling circuit (18) to cool said magnetron (12) and said circulator (13).

9. An apparatus according to claim 7 or 8, **characterized in that**
- said magnetron (12) is connected by means of a signal line (C4) to the controller (11) and comprises a thermocouple able to measure the temperature thereof, so that when the temperature detected by the thermocouple exceeds a pre-set threshold value, a control signal is sent via the line (C4), to the controller (11) of the power supply to decrease the power of the electrical supply to the magnetron (12), and
- said circulator (13) is connected to the controller (11) of the power supply (10) by means of a signal line (C3), so that when the reflected microwave power dissipated on the load of the circulator (13) exceeds a pre-set threshold value, a control signal, is sent by means of the signal line (C3) to the controller (11) of the power supply to decrease the power of the electrical supply to the magnetron (12).

10. An apparatus according to any one of the preceding claims, **characterized in that** it comprises a control panel (6) connected to the mains electrical supply (14) for powering of said microwave generation means (MG1, MG2, MG3, MG4), of said motors (M1, M2) of the stirrers (ST1, ST2) and of said temperature detection means (8, S1, S2, S3).

11. An apparatus according to any one of the preceding claims, **characterized in that** it comprises a processor (17) comprising an interface (16) connected by means of electronic signal lines (C1, C2, C3, C6, C7, C8) respectively to the controller (11) of the power supply (10) of the microwave generation means and the temperature detection means, said processor (17) calculating the temperature of said object (3) according to the signals received from said temperature detection means and sends a control signal to the controller (11) of the power supply (10) to regulate the supply of electrical power to the magnetron (12) according to the temperature value calculated.

12. A method of disinfesting objects of biological pests **characterized in that** said object (3) is irradiated by means of microwaves able to increase the temperature of said biological pests to their lethal temperature, causing their death.

13. A method according to claim 12 **characterized in that** said object (3) is placed in a shielded chamber (1) during irradiation of the microwaves.

14. A method according to claim 12 or 13 **characterized in that** during irradiation of the microwaves onto the object (3) the temperature of the object is measured to regulate the power of the microwaves so as not to exceed a preset temperature above which the object could be damaged.

15. A method according to any one of the claims from 12 to 14, **characterized in that** said biological pests are xylophagous insects, such as woodworms, which are heated up to a lethal temperature comprised in the range from 50 to 100 degrees centigrade.

16. A method according to any one of the claims from 12 to 14, **characterized in that** said biological pests are pathogenic microorganism, such as virus, bacteria, bacillus, spores, which are heated up to a lethal temperature comprised in the range from 100 to 150 degrees centigrade.
